# EUROPÄISCHE PATENTSCHRIFT

(11) **EP 3 005 465 B1**
(45) Veröffentlichungstag und Bekanntmachung des Hinweises auf die Patenterteilung: **28.03.2018**
(21) Anmeldenummer: 14744749.4
(22) Anmeldetag: 02.06.2014
(51) Int. Cl.: H01M 2/10, H01M 10/42, B65D 90/24

(54) **SICHERHEITSBEHÄLTNIS FÜR GEFÄHRLICHES LADEGUT, INSBESONDERE FÜR BATTERIEN**
SAFETY CONTAINER FOR DANGEROUS GOODS, IN PARTICULAR BATTERIES
CONTENEUR DE SÉCURITÉ POUR MARCHANDISES DANGEREUSES, EN PARTICULIER POUR DES BATTERIES

(30) Priorität: 02.06.2013 DE 202013004963 U
(43) Veröffentlichungstag der Anmeldung: 13.04.2016
(73) Patentinhaber: Kohten, Markus, 59075 Hamm (DE)
(72) Erfinder: Kohten, Markus, 59075 Hamm (DE)
(74) Vertreter: Kayser, Christoph
(86) Internationale Anmeldenummer: PCT/DE2014/000268
(87) Internationale Veröffentlichungsnummer: WO 2014/194876

(56) Entgegenhaltungen:
- EP-A2- 2 537 768
- DE-A1-102010 035 959
- US-A1- 2012 225 331

## Beschreibung

Die vorliegende Erfindung betrifft ein Sicherheitsbehältnis für gefährliches Ladegut, insbesondere für Batterien bzw. Akkumulatoren, das sowohl Lagerungs- als auch Transportzwecken dienen kann.

Ladegut, bei dem die Gefahr besteht, dass Gefahrstoffe freigesetzt werden und in die Umwelt gelangen können, unterliegt hinsichtlich für die korrekte Lagerung und für den Transport zu verwendender Behältnisse strengen Vorschriften. Die Freisetzung von Gefahrstoffen kann durch Überlagerung, thermische, mechanische, chemische oder elektrische Einflüsse hervorgerufen werden. Aus diesem Grunde, ist es wünschenswert, ein Behältnis bereit zu stellen, das sowohl transportrechtlichen als auch lagerrechtlichen Vorschriften für gefährliches Ladegut entspricht, insbesondere solchen für Batterien, und das möglicherweise aus dem Ladegut entweichende Gefahrstoffe zuverlässig zurückhält sowie die Gefahr, dass ein Brand um sich greift, minimiert. Unter Batterien seien hier sowohl Einmalbatterien als auch wiederaufladbare Batterien beziehungsweise Akkumulatoren verstanden.

Brände entstehen zumeist, wenn ein brennbares Gas oder Gasgemisch mit einer Zündquelle, wie beispielsweise glühenden Partikeln, in Kontakt kommt. Daher ist es auch wünschenswert, ein Behältnis bereit zu stellen, bei dem sicher gestellt ist, dass möglicherweise vom Ladegut freigesetzte glühende Partikeln von einem möglicherweise ebenfalls freigesetzten brennbaren Gas oder Gasgemisch ferngehalten werden.

DE 203 18 982 U1 offenbart bereits ein kastenförmiges Behältnis zum Transport und zur Aufbewahrung von Gegenständen, insbesondere von sehr leicht entzündlichen und explosiven Gegenständen, beispielsweise Lithium-Polymer-Zellen, das aus einem unteren und einem oberen Behältnisteil besteht, wobei in den Behältnisteilen jeweils eine Innenschale angeordnet ist und zwischen den Innenwandungen von dem unteren und dem oberen Behältnisteil und den Außenwänden der jeweiligen Innenschalen eine aus einem Schaumglaszement bestehende Schutzisolierung angeordnet ist, die die Innenschalen vollumfänglich einschließt. Weiterhin ist in dem oberen Behältnisteil eine flammendurchschlagsichere Druckentlastung vorgesehen, die aus einem Vorfilter, einem aus einem Schaumglaszement bestehenden Filtereinsatz, einer Filterpackung sowie einer Filterabdeckung und einem Abdecklochblech besteht. Nachteilig an diesem Behältnis ist der notwendige Einsatz von Schaumglaszement, der nicht frostbeständig ist und Mikrorisse ausbilden kann.

Aufgabe der vorliegenden Erfindung ist es daher, ein Sicherheitsbehältnis bereit zu stellen, das die oben benannten wünschenswerten Eigenschaften, nicht jedoch die Nachteile des angeführten Stands der Technik aufweist.

Diese Aufgabe wird gelöst durch ein Sicherheitsbehältnis gemäß Anspruch 1, ein Außenkompartiment gemäß Anspruch 13 und ein Innenkompartiment gemäß Anspruch 14, wobei sich vorteilhafte Ausführungsformen aus den jeweiligen Unteransprüchen ergeben.

Das erfindungsgemäße Sicherheitsbehältnis ist durch ein vollumfänglich eine Barriere für Feststoffpartikeln ausbildendes Innenkompartiment gekennzeichnet, dass vollständig von einem Außenkompartiment umgeben ist und bereichsweise oder insgesamt durchlässig für Gase oder für Fluide ist. Die Durchlässigkeit für Fluide, also Flüssigkeiten oder Gase, nicht jedoch Feststoffpartikeln, wird vorzugsweise mittels Vliesmaterial erreicht.

In einer erfindungsgemässen Ausführungsform des Sicherheitsbehältnisses ist in oder an dem Außenkompartiment unterhalb des Innenkompartiments eine Auffangfläche für flüssige Gefahrstoffe, wie beispielsweise Säuren, angeordnet. Geeignete Materialien, aus denen die Auffangfläche dafür bestehen muss oder die sie zumindest aufweisen muss, sind dem Fachmann bekannt.

Gemäss der Erfindung ist die Auffangfläche wannenförmig ausgebildet. So wird bei dem Austritt größerer Mengen gefährlicher Flüssigkeiten während der Lagerung vermieden, dass Flüssigkeit sich außerhalb der Auffangfläche verteilt.

Das Sicherheitsbehältnis kann aus formstabilem und/oder weichem Material gefertigt sein. Für die Aufnahme von Ladegut hohen Gewichts ist erfindungsgemäss vorgesehen, dass das Außenkompartiment eine versteifte, von dem tiefsten Punkt der Auffangfläche beabstandet angeordnete Aufnahmefläche für das Innenkompartiment mit dem Ladegut aufweist.

Es ist möglich, das Sicherheitsbehältnis so auszugestalten, dass das Innenkompartiment der Innenfläche des Außenkompartiments aufliegt. Bevorzugt kommen jedoch Stützelemente zum Einsatz, um die Aufnahmefläche zumindest von dem tiefsten Punkt der Auffangfläche zu beabstanden. Dabei können die Stützelemente auch in die Auffangfläche, die nicht notwendigerweise plan sein muss, integriert sein. Dies gelingt mit einer wannenförmigen Ausgestaltung der Auffangfläche. Die Auffangfläche kann auch außerhalb des Außenkompartiments an diesem angeordnet sein, wobei das Außenkompartiment formschlüssig auf dem Rand einer entsprechend ausgeformten Wanne angeordnet ist. Durch die Beabstandung der Aufnahmefläche von dem tiefsten Punkt der Auffangfläche ist sichergestellt, dass ein ausreichend dimensionierter Raum zwischen Auflagefläche und Auffangfläche für die möglicherweise von dem Ladegut freigesetzte Flüssigkeit zur Verfügung steht. In einer bevorzugten Ausführungsform des Sicherheitsbehältnisses ist an der Aufnahmefläche wenigstens ein Vibrationsdämpfungselement angeordnet, um einen vibrationsarmen Transport von empfindlichem Ladegut gewährleisten zu können. Dabei kann die Aufnahemfläche beispielsweise an ihren Auflagepunkten auf der Stützkonstruktion mit schwingungsdämpfenden Materialien, die dem Fachmann bekannt sind, ausgestattet sein.

Um gegebenenfalls ein kontrolliertes Abtropfen von Flüssigkeit aus dem Ladegut sicherzustellen, ist es erfindungsgemäss vorgesehen, dass die Aufnahmefläche für das Innenkompartiment mit dem Ladegut für Feststoffpartikeln undurchlässig, für Fluide jedoch ganz oder bereichsweise durchlässig ist. Vorzugsweise weist die Aufnahmefläche zu diesem Zweck Vliesmaterial auf.

Eine bevorzugte Ausführungsform des Sicherheitsbehältnisses weist wenigstens ein Lagesicherungselement für das Ladegut auf. Lagesicherungselemente sind dem Fachmann an sich bekannt. Dies können beispielsweise Spanngurte und entsprechend angeordnete Ösen sein oder auch verschieblich angeordnete Raumteiler, die vorzugsweise bei Sicherheitsbehältnissen aus formstabilem Material eingesetzt werden können. Das Lagesicherungselement muss nicht zwingend innerhalb des Außenkompartiments angeordnet sein. Als vorteilhaft hat es sich aber erwiesen, wenn es außerhalb des Innenkompartiments positioniert ist.

Das Außenkompartiment weist vorteilhafterweise wenigstens eine Lüftungsöffnung auf, um der Ansammlung von gefährlichen oder gefährdenden Gasen oder Gasgemischen im Sicherheitsbehältnis vorzubeugen. Bevorzugt ist diese Lüftungsöffnung im Bedarfsfall verschließbar ausgeführt. Eine Steigerung der Durchlüftung des Außenkompartiments wird erreicht, wenn diese mehr als eine Lüftungsöffnung aufweist, wobei diese im Falle von beispielsweise zwei Lüftungsöffnungen vorteilhafterweise möglichst weit voneinander entfernt angeordnet sind.

Die Konstruktion des Sicherheitsbehältnisses erschwert bereits für sich genommen eine Entzündung von entflammbaren Gasen oder Gasgemischen, die aus dem Ladegut freigesetzt werden können, da sich solche Gase oder Gasgemische im Regelfall an zeitnah ebenfalls freigesetzten glühenden Partikeln, auch als Funkenflug bekannt, entzünden. Da das Innenkompartiment lediglich für Gase oder für Fluide nicht jedoch für Feststoffpartikeln permeabel ist, ist der Sauerstoffanteil innerhalb des Innenkompartiments für das Entflammen des Gases oder Gasgemisches zumeist zu gering. Im Außenkompartiment wäre zwar ein ausreichender Sauerstoffanteil möglicherweise gegeben, jedoch vermögen die glühenden Partikeln, die dort eine Entflammung verursachen könnten, nicht in das Außenkompartiment vorzudringen. Dieser konstruktiv bedingte Sicherheitseffekt ist besonders ausgeprägt, wenn das Ladegut das Innenkompartiment zu drei Vierteln oder mehr ausfüllt und/oder mit inerten Gasen oder Gasgemischen gefüllt ist.

Um die Sicherheit des Sicherheitsbehältnisses weiter zu erhöhen ist es von Vorteil, wenn das Sicherheitsbehältnis einen Temperatursensor aufweist. Weiterhin kann ein Branderkennungselement in oder an dem Sicherheitsbehältnis angeordnet sein. Schließlich erhöht es die Sicherheit, wenn das Sicherheitsbehältnis einen Löschmittelgeber aufweist, der unter vordefinierten Bedingungen Löschmittel abgibt. Besonders vorteilhaft ist es, den Temperatursensor und/oder das Branderkennungselement mit dem Löschmittelgeber und/oder einem Alarmgeber zu koppeln.

In einer bevorzugten Ausführungsform des Sicherheitsbehältnisses weist der Löschmittelgeber einen in das Außenkompartiment und/oder das Innenkompartiment gerichteten Löschmittelauslass auf, der in geeigneten Fällen auch direkt in das Ladegut gerichtet sein kann.

Besonders vorteilhaft ist es, wenn der Löschmittelgeber an ein Reservoir mit haftfähigem Kühl- und/oder Löschmittel angeschlossen ist. Durch das Anhaften des Kühl- und/oder Löschmittels an der Innenseite des Außenkompartiments und der Außenseite des Innenkompartiments, bei Einleiten von Kühl- und/oder Löschmittel in das Innenkompartiment auch durch das Anhaften an der Innenseite des Innenkompartiments, wird die Temperatur im Sicherheitsbehältnis gesenkt. Dadurch oder durch die bevorzugte Verwendung kondensationsfördernder Löschmittel wird die Kondensation freigesetzter Gase oder Gasgemische gefördert.

Besteht das Ladegut aus elektrischen Bauteilen, beispielsweise Batterien, ist es von Vorteil, wenn das Außenkompartiment zumindest außen mit einem elektrisch leitfähigen, chemikalienbeständigen Lack beschichtet ist, um Schäden durch elektrostatische Aufladung vorzubeugen. Ebenso erhöht es die Sicherheit in solchen Fällen, wenn das Sicherheitsbehältnis an der Außenseite des Außenkompartiments einen Erdungsanschluss aufweist.

Bevorzugt wird das Sicherheitsbehältnis so ausgeführt, dass sämtliche mechanischen Bauteile aus feuerfestem Material bestehen. Für eine sichere Be- und Entladung des Sicherheitsbehältnisses ist es vorteilhaft, wenn das Außen- und das Innenkompartiment jeweils wenigstens eine verschließbare, vorzugsweise von oben zugängliche Öffnung für das Ladegut aufweisen. Dabei dient es nicht nur dem Komfort sondern auch der Sicherheit, wenn die Öffnungen durch Klappen verschließbar sind, die durch entsprechend angeordnete Federn, Gas- oder Öldruckdämpfer in geöffneter Position gehalten werden können. Weiterhin weisen die Innenkompartimente bevorzugt Blähfenster auf, also Bereiche der Wandung des Innenkompartiments, die gegenüber dem sie umgebenden Material eine höhere Elastizität und Gasdurchlässigkeit aufweisen. Bei einem kubusförmigen Außenkompartiment ist es von Vorteil, die Öffnung des Außenkompartiments als Schrägschnitt anzulegen. Dies hat zur Folge, dass die Öffnung lediglich einen umlaufenden, in einer Ebene angeordneten Rand aufweist, der vorteilhafterweise mit nur einer entsprechend umlaufenden Dichtung bestückt werden kann. So werden Wartungs- und Austauscharbeiten vereinfacht bei gleichzeitiger Erhöhung der Dichtungseffizienz.

Der Transport und/oder die Lagerung des Sicherheitsbehältnisses wird bevorzugt durch Transport- und/oder Stapelhilfselemente erleichtert, wie beispielsweise Staplerschuhe, Stapelecken, Kranösen, Schlaufen oder Kombinationen aus diesen.

Bei einer besonders umweltfreundlichen Variante des Sicherheitsbehältnisses wird auf die Lüftungsöffnungen zugunsten eines oder mehrerer definierter Gasdurchlässe verzichtet. Mit Ausnahme des Gasauslasses wird das Außenkompartiment gasdicht verschlossen. Im Havariefall aus dem Ladegut entweichendes Gas kann somit nur durch den oder die Gasauslässe nach außen dringen. Jeder der Gasauslässe ist bevorzugt Teil einer Filterstrecke, die vor und/oder hinter dem jeweiligen Gasauslass Filtermaterial aufweist, das beispielsweise Steinwolle, Aktivkohle oder geeignete Gele aufweist. Besonders bewährt hat es sich, einen Gasauslass unterhalb der Aufnahmefläche für das Innenkompartiment mit dem Ladegut anzuordnen, der sich im unteren Bereich einer ein Gefälle aufweisenden Auffangfläche befindet. Im Falle der Freisetzung von Kühl- und/oder Löschmitteln in Gelform sammeln sich diese vor dem Gasdurchlass und bilden so, vorzugsweise in einer dafür ausgeformten Rinne, eine erste Barriere für austretende Gase und bewirken so eine Nassfiltration. Nach Durchtritt des nass filtrierten Gases oder Gasgemisches durch den Gasauslass ist es vorteilhat, wenn dieses einer trockenen Filtration unterzogen wird. Vorzugsweise wird dafür auf der Filtrationsstrecke Steinwolle gefolgt von Aktivkohle angeordnet.

Nachfolgend wird die Erfindung anhand zweier bevorzugter Ausführungsbeispiele näher erläutert.

### Legende:

- 1: Sicherheitsbehältnis
- 2: Innenkompartiment
- 2a: Öffnung des Innenkompartiments
- 3: Außenkompartiment
- 3a: Öffnung des Außenkompartiments
- 3b: umlaufender Rand der Öffnung des Außenkompartiments
- 4: Auffangfläche
- 5: Aufnahmefläche
- 6: Vibrationsdämpfungselement
- 7: Lagesicherungselement
- 8: Lüftungsöffnung
- 9a: Temperatursensor
- 9: Branderkennungselement
- 10: Löschmittelgeber
- 11: Löschmittelauslass
- 12: Reservoir
- 13: Alarmgeber
- 14: Erdungsanschluss
- 15: Transport- und/oder Stapelhilfselement
- 16: Vorrichtung zum Kondensieren von Gasen
- 17: Gasdurchlass
- 18: Filterstrecke
- 19: Filtermaterial
- 20: Gel
- 21: Steinwolle
- 22: Aktivkohle
- 23: Blähfenster

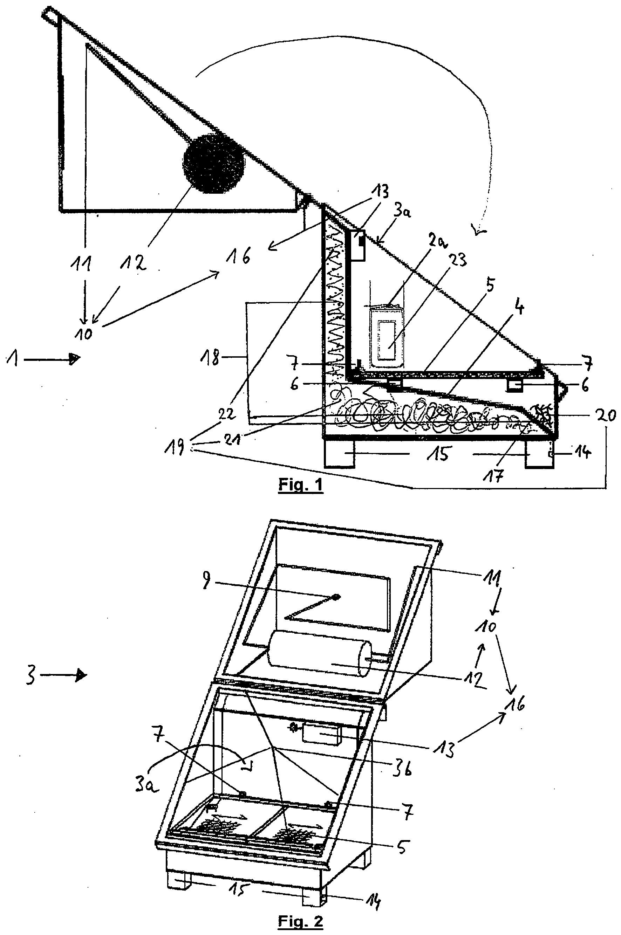

**Fig. 1** zeigt ein Sicherheitsbehältnis (1) mit kubischem Außenkompartiment (3) und einem Innenkompartiment (2) im Querschnitt, in das über die Öffnung (2a), die hier bereits mittels übereinanderlegbarer Laschen verschlossen ist, das Ladegut verbracht werden kann. Vorteilhafterweise ist das Innenkompartiment (2) mit bügelförmigen Griffen für das als Tasche ausgestaltete Innenkompartiment (2) ausgestattet. Das Innenkompartiment weist an seinen Stirnseiten jeweils ein Blähfenster (23) auf, dessen Elastizität und Gasdurchlässigkeit gegenüber dem umgebenden Innenkompartimentmaterial erhöht ist, um ein entweichen von Gasen, Gasgemischen und notfalls auch Flüssigkeiten zu ermöglichen. Die Innenkompartimente (2), von denen hier nur eines gezeigt ist, sind auf der Aufnahmefläche (4) des Außenkompartiments (3) angeordnet und können zusätzlich übereinander gestapelt werden. An den Rändern der Aufnahmefläche (4) sind Lagesicherungselemente (7) in Form von Ösen zum Festzurren des oder der Innenkompartimente (2) auf Schienen verschieblich angeordnet. Die Unterseite der Aufnahmefläche (4) ist mit Vibrationsdämpfungselementen ausgestattet, um einen möglichst erschütterungsfreien Transport des Ladeguts gewährleisten zu können. Die Öffnung (3a) des Außenkompartiments (3) ist hier als Schrägschnitt des kubischen Außenkompartiments (3) ausgestaltet und in geöffnetem Zustand gezeigt. In dem Deckel des Außenkompartiments (3) ist das Reservoir für Kühl- und/oder Löschmittel angeordnet, das einen in das Innere des Außenkompartiments (3) gerichteten Löschmittelauslass (11) aufweist, die zusammen als Löschmittelgeber (10) bezeichnet werden, der in Kombination mit einem Alarmgeber (13) eine Vorrichtung zum Kondensieren von Gasen (16) ergibt, die im Alarmfall Kühl- und/oder Löschmittel freisetzt, das die Kondensation von Gasen oder Gasgemischen aufgrund des Temperaturdifferenzeffekts fördert. Die gezeigte Ausführungsform weist eine in Richtung eines Gasdurchlasses (17) abfallende Auffangfläche (5) unterhalb der Aufnahmefläche (4) auf. Der Bereich vor dem Gasdurchlass (17) ist hier als Rinne ausgeformt, in der sich Kühl- und/oder Löschmittel in Gelform ansammeln kann. Die mit Gel (20) gefüllte Rinne, der Gasdurchlass (17) und eine Gasführung hinter dem Gasdurchlass (17), die in diesem Falle mit Steinwolle (21) und Aktivkohle (22) gefüllt ist, bilden zusammen die Filtrationsstrecke (18), die hier im oberen Bereich des Außenkompartiments endet. Gel (20), Steinwolle (21) und Aktivkohle (22) sind vorteilhafterweise in dieser Abfolge hintereinander angeordnet und bilden zusammen das Filtermaterial (19). Das Außenkompartiment (3) steht auf Transport- und/oder Stapelhilfselementen (15), in diesem Fall auf Staplerschuhen. An der Außenseite des Außenkompartiments (3), hier an den Transport- und/oder Stapelhilfselementen (15) ist ein Erdungsanschluss (14) angeordnet.
**Fig. 2** zeigt das Außenkompartiment (3) in geöffnetem Zustand schräg von oben in der Draufsicht. Zu erkennen sind hier zusätzlich zu den in **Fig. 1** gezeigten Merkmalen das Branderkennungselement (9), das beispielsweise einen ab einer definierten Temperatur schmelzenden Schlauch aufweisen kann, sowie der Temperatursensor (9a) und den umlaufenden Rand (3b) der Öffnung (3a) des Außenkompartiments (3).

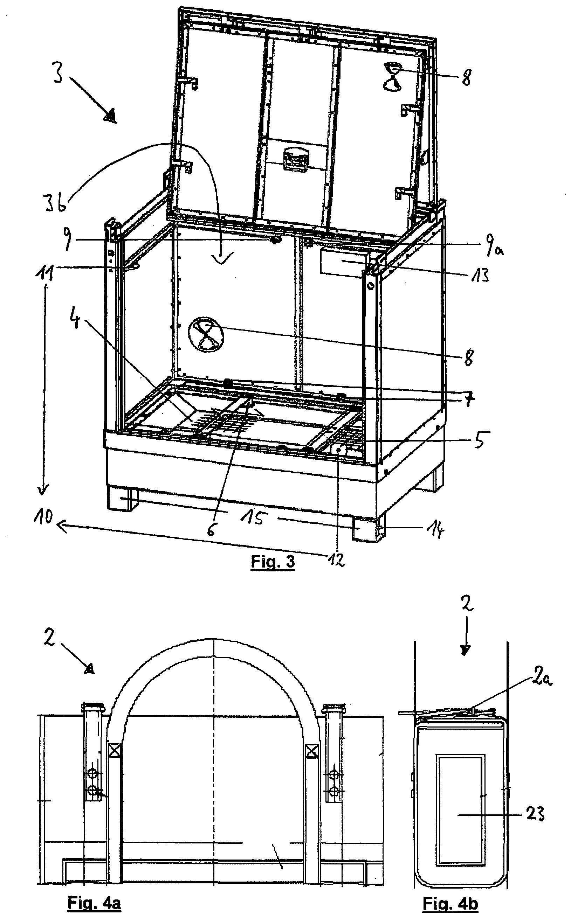

**Fig. 3** zeigt eine vereinfachte Ausführungsform des Außenkompartiments (3) schräg von oben in der Draufsicht. Im Unterschied zu der in Fig. 1 und 2 gezeigten Ausführungsform des Außenkompartiments (3) ist die Auffangfläche (4) hier wannenförmig ausgestaltet und als separates Bauteil gefertigt, auf dem der übrige Teil des Außenkompartiments (3) mit der Aufnahmefläche (4) für das Innenkompartiment (2) mit dem Ladegut dichtend aufliegt. Anstelle des Gasdurchlasses (17) und der Filterstrecke (18) mit dem Filtermaterial (19) sind hier lediglich gegenüberliegend diagonal versetzt angeordnete, verschließbare Lüftungsöffnungen (8) vorgesehen. Der Löschmittelgeber (10) mit Löschmittelauslass (11) und Reservoir (12), der auch hier zusammen mit dem Alarmgeber (13) die Vorrichtung zum Kondensieren von Gasen (16) bildet, ist hier unterhalb der Aufnahmefläche (5) innerhalb der wannenförmigen Auffangfläche (4) angeordnet. Die Öffnung (3a) des Außenkompartiments ist hier winklig ausgebildet und erfordert eine zweiteilige Klappe.
Fig. 4a zeigt das Innenkompartiment (2) von der Seite und lässt die taschenartige Ausgestaltung erkennen.
Fig. 4b zeigt das Innnenkompartiment (2) von der Stirnseite und lässt die durch überlappende Laschen verschlossene Öffnung (2a) des Innenkompartiments (2) erkennen sowie das Blähfenster (23).

## Patentansprüche

1. Sicherheitsbehältnis (1) für gefährliches Ladegut, insbesondere für Batterien,
**gekennzeichnet durch**
wenigstens ein vollumfänglich eine Barriere für Feststoffpartikeln ausbildendes Innenkompartiment (2), das von einem Außenkompartiment (3) vollständig umgeben und bereichsweise oder insgesamt durchlässig für Gase oder für Fluide ist, wobei in oder an dem Außenkompartiment (3) unterhalb des Innenkompartiments (2) eine wenigstens teilweise wannenförmig ausgebildete Auffangfläche (4) für flüssige Gefahrstoffe angeordnet ist und das Außenkompartiment (3) eine versteifte, von dem tiefsten Punkt der Auffangfläche (4) beabstandet angeordnete Aufnahmefläche (5) für das Innenkompartiment (2) mit dem Ladegut aufweist, wobei die Aufnahmefläche (5) bereichsweise oder insgesamt durchlässig für Fluide ist und bevorzugt Vliesmaterial aufweist.

2. Sicherheitsbehältnis (1) nach Anspruch 1,
**dadurch gekennzeichnet,**
**dass** das Außenkompartiment (3) wenigstens eine, vorzugsweise verschließbare Lüftungsöffnung (8), einen Löschmittelgeber (10) und einen Termperatursensor (9a) und/oder ein Branderkennungselement (9) aufweist, wobei der Temperatursensor (9a) und/oder das Branderkennungselement (9) mit dem Löschmittelgeber (10) und/oder einem Alarmgeber (13) gekoppelt ist.

3. Sicherheitsbehältnis (1) nach Anspruch 2,
**dadurch gekennzeichnet,**
**dass** der Löschmittelgeber (10) einen in das Außenkompartiment (3) und/oder das Innenkompartiment (2) gerichteten Löschmittelauslass (11) und ein Reservoir (12) mit haftfähigem, vorzugsweise die Kondensation von Gasen förderndem Kühl- und/oder Löschmittel aufweist.

4. Sicherheitsbehältnis (1) nach einem der vorhergehenden Ansprüche,
**dadurch gekennzeichnet,**
**dass** das Außenkompartiment (3) zumindest außen mit elektrisch leitfähigem, chemikalienbeständigem Lack beschichtet ist, einen Erdungsanschluss (14) an seiner Außenseite aufweist und sämtliche mechanischen Bauteile aus feuerfestem Material bestehen.

5. Sicherheitsbehältnis (1) nach einem der vorhergehenden Ansprüche,
**dadurch gekennzeichnet,**
**dass** an der Aufnahmefläche (5) wenigstens ein Vibrationsdämpfungselement (6) angeordnet ist.

6. Sicherheitsbehältnis (1) nach einem der vorhergehenden Ansprüche,
**dadurch gekennzeichnet,**
**dass** das Innen- (2) und das Außenkompartiment (3) jeweils wenigstens eine verschließbare, vorzugsweise von oben zugängliche Öffnung (2a, 3a) für das Ladegut aufweisen und das Außenkompartiment (3) Transport- und/oder Stapelhilfselemente (15) wie beispielsweise Staplerschuhe, Stapelecken, Kranösen, Schlaufen oder Kombinationen aus diesen.

7. Sicherheitsbehältnis (1) nach einem der vorhergehenden Ansprüche,
**gekennzeichnet durch**
wenigstens eine Vorrichtung zum Kondensieren von Gasen (16).

8. Sicherheitsbehältnis (1) nach einem der vorhergehenden Ansprüche,
**dadurch gekennzeichnet,**
**dass** das Außenkompartiment (3) mit Ausnahme eines oder mehrerer definierter Gasdurchlässe (17) gasdicht verschließbar ist, wobei wenigstens ein Gasdurchlass (17) unterhalb der Aufnahmefläche (5) angeordnet ist.

9. Sicherheitsbehältnis (1) nach Anspruch 8,
**dadurch gekennzeichnet,**
**dass** der oder die Gasdurchlässe (17) jeweils Teil einer Filterstrecke (18) sind, die vor und/oder hinter dem jeweiligen Gasdurchlass (17) Filtermaterial (19) aufweist.

10. Sicherheitsbehältnis (1) nach Anspruch 9,
**dadurch gekennzeichnet,**
**dass** das Filtermaterial (19) Gel (20) zur Nassfiltration von Gasen und/oder Steinwolle (21) zur Trockenfiltration von Gasen und/oder Aktivkohle (22) aufweist.

11. Sicherheitsbehältnis (1) nach einem der Ansprüche 8 bis 10,
**dadurch gekennzeichnet,**
**dass** die Auffangfläche (4) ein Gefälle in Richtung wenigstens eines Gasdurchlasses (17) aufweist.

12. Sicherheitsbehältnis (1) nach einem der Ansprüche 6 bis 11,
**dadurch gekennzeichnet,**
**dass** die Öffnung (3a) des Außenkompartiments (3) einen in einer Ebene liegenden umlaufenden Rand (3b) aufweist, der vorzugsweise mit einer umlaufenden Dichtung versehen ist.

13. Außenkompartiment (3) eines die Merkmale der Ansprüche 1 bis 12 verwirklichenden Sicherheitsbehältnisses (1)
**gekennzeichnet durch**
die auf das Außenkompartiment (3) bezogenen, von einem der Ansprüche 1 bis 12 umfassten Merkmale.

14. Innenkompartiment (2) eines die Merkmale der Ansprüche 1 bis 12 verwirklichenden Sicherheitsbehältnisses (1)
**gekennzeichnet durch** wenigstens eine verschließbare, vorzugsweise von oben zugängliche Öffnung (2a) für das Ladegut und wenigstens ein die Elastizität und Gasdurchlässigkeit des umgebenden Innenkompartimentmaterials übertreffendes Blähfenster (23).

## Claims

1. Safety container (1) for hazardous cargos, in particular for batteries,
**characterised by**
at least one inner compartment (2), fully forming a barrier for solid particles, which is completely surrounded by an outer compartment (3) and is in parts or entirely permeable for gases or fluids, wherein in or on the outer compartment (3), below the inner compartment (2) an a least partially trough-like collection surface (4) for liquid hazardous substances is arranged and the outer compartment (3) has, at a distance from the deepest point of the collection surface (4), a reinforced receiving surface (5) for the inner compartment (2) with the cargo, wherein in parts or in its entirety the collection surface (5) is permeable for fluids and preferably comprises non-woven material.

2. Safety container (1) according to claim 1,
**characterised in that**
the outer compartment (3) comprises at least one, preferably closable ventilation opening (8), an extinguishing agent dispenser (10) and a temperature sensor (9a) and/or a fire detection element (9), wherein the fire detection element (9a) and/or the fire detection element (9) is connected to the extinguishing agent dispenser (10) and/or an alarm (13).

3. Safety container (1) according to claim 2,
**characterised in that**
the dispensing agent emitter (10) comprises an extinguishing agent outlet (11) pointing into the outer compartment (3) and/or the inner compartment (2), and a reservoir (12) with adhesive cooling and/or extinguishing agent which preferably promotes the condensation of gases.

4. Safety container (1) according to any one of the preceding claims,
**characterised in that**
the outer compartment (3) is at least externally coated with electrically conductive, chemical-resistant paint, has an earth connection (14) on its outer side and all components are made of a fire-proof material.

5. Safety container (1) according to any one of the preceding claims,
**characterised in that**
a vibration damping element (6) is arranged on the receiving surface (5).

6. Safety container (1) according to any one of the preceding claims,
**charact rised in that**
the inner (2) and outer compartment (3) each have at least one closable opening (2a, 3a), preferably accessible from above, for the cargo and the outer compartment (3) has transport and/or stacking aid elements (15) such as, for example, stacking shoes, stacking corners, eye hooks, loops or combinations of these.

7. Safety container (1) according to any one of the preceding claims,
**characterised by**
at least one device for condensing gases (16).

8. Safety container (1) according to any one of the preceding claims,
**characterised in that**
the outer compartment (3) can be closed in a gas-tight manner, with the exception of one or more defined gas outlets (17), wherein at least one gas outlet (17) is arranged underneath the receiving surface (5).

9. Safety container (1) according to claim 8,
**characterised in that**
the gas outlet(s) is/are each part of a filter section (18) which before and/or after the respective gas outlet (17) comprises filter material (19).

10. Safety container (1) according to claim 9,
**characterised in that**
the filter material (19) comprises gel (20) for the wet filtration of gases and/or mineral wool (21) for the dry filtration of gases and/or activated charcoal (22).

11. Safety container (1) according to one of claims 8 to 10,
**characterised in that**
the collection surface (4) is inclined in the direction of at least one gas outlet (17).

12. Safety container (1) according to one of claims 6 to 11,
**characterised in that**
the opening (3a) of the outer compartment (3) comprises a circumferential edge (3b) lying in one plane which is preferably provided with a circumferential seal.

13. Outer compartment (3) of a safety container (1) manifesting one of the features of claims 1 to 12,
**characterised by**
the features relating to the outer compartment (3) covered by any one of claims 1 to 12.

14. Inner compartment (2) of a safety container (1) manifesting one of the features of claims 1 to 12,
**characterised by**
at least one closable opening (2a), preferably accessible from above, for the cargo and at least one distending window (23) exceeding the elasticity and gas permeability of the surrounding inner compartment material.

## Revendications

1. Contenant de sécurité (1) pour produits de chargement dangereux, notamment des batteries,
**caractérisé par**
au moins un compartiment intérieur (2), formant sur toute la périphérie une barrière pour des particules solides, qui est entièrement entouré d'un compartiment extérieur (3) et par endroits ou totalement est perméable aux gaz ou aux fluides, dans ou sur le compartiment extérieur (3), en-dessous du compartiment intérieur (2) étant placée une surface collectrice (4) de substances dangereuses liquides au moins partiellement conçue en forme de cuve et le compartiment extérieur (3) comportant une surface de logement (5) pour le compartiment intérieur (2) placée à un écart du point le plus bas de la surface collectrice (4) pour le produit de chargement, la surface collectrice (5) étant par endroits ou totalement perméable aux fluides et comportant de préférence de la matière non-tissée.

2. Contenant de sécurité (1) selon la revendication 1,
**caractérisé en ce que**
le compartiment extérieur (3) comporte au moins un orifice de ventilation (8), de préférence fermant, un distributeur de produit d'extinction (10) et un capteur de température (9a) et/ou un élément détecteur d'incendie (9), le capteur de température (9a) et/ou l'élément détecteur d'incendie (9) étant accouplé au distributeur de produit d'extinction (10) et/ou à un avertisseur (13).

3. Contenant de sécurité (1) selon la revendication 2,
**caractérisé en ce que**
le distributeur de produit d'extinction (10) comporte une sortie de produit d'extinction (11) dirigée dans le compartiment extérieur (3) et/ou dans le compartiment intérieur (2) et un réservoir (12) avec un agent réfrigérant et/ou un produit d'extinction doté d'un pouvoir d'adhérence, de préférence favorisant la condensation des gaz.

4. Contenant de sécurité (1) selon l'une quelconque des revendications précédentes,
**caractérisé en ce que**
le compartiment extérieur (3) est revêtu au moins sur l'extérieur de laque conductrice d'électricité, résistant aux produits chimiques, comporte sur sa face extérieure une borne de terre (14) et **en ce que** tous les éléments constitutifs mécaniques sont en matière réfractaire.

5. Contenant de sécurité (1) selon l'une quelconque des revendications précédentes,
**caractérisé en ce que**
sur la surface de logement (5) est placé au moins un élément amortisseur vibratoire (6).

6. Contenant de sécurité (1) selon l'une quelconque des revendications précédentes,
**caractérisé en ce que**
le compartiment intérieur (2) et le compartiment extérieur (3) comportent chacun au moins une ouverture (2a, 3a) fermante, de préférence accessible par le dessus pour le produit de chargement et **en ce que** le compartiment extérieur (3) comporte des éléments d'aide au transport- et/ou au gerbage (15), comme par exemple des adaptateurs à fourches, des coins de gerbage, des oeillets de grue, des boucles ou des associations de ces derniers.

7. Contenant de sécurité (1) selon l'une quelconque des revendications précédentes,
**caractérisé par**
au moins un dispositif de condensation des gaz (16).

8. Contenant de sécurité (1) selon l'une quelconque des revendications précédentes,
**caractérisé en ce que**
le compartiment extérieur (3), à l'exception d'un ou plusieurs passages de gaz (17) définis est fermant de manière étanche au gaz, au moins un passage de gaz (17) étant placé en-dessous de la surface de logement (5).

9. Contenant de sécurité (1) selon la revendication 8,
**caractérisé en ce que**
le ou les passages de gaz (17) sont chacun une partie d'un trajet filtrant (18) qui à l'avant et/ou à l'arrière du passage de gaz (17) concerné comporte de la matière filtrante (19).

10. Contenant de sécurité (1) selon la revendication 9,
**caractérisé en ce que**
la matière filtrante (19) comporte du gel (20) pour la filtration humide de gaz et/ou de la laine minérale (21) pour la filtration à sec de gaz et/ou du charbon actif (22).

11. Contenant de sécurité (1) selon l'une quelconque des revendications 8 à 10,
**caractérisé en ce que**
la surface collectrice (4) comporte une inclinaison dans la direction d'au moins un passage de gaz (17).

12. Contenant de sécurité (1) selon l'une quelconque des revendications 6 à 11,
**caractérisé en ce que**
l'ouverture (3a) du compartiment extérieur (3) comporte un bord (3b) périphérique situé dans un plan qui est muni d'un joint périphérique.

13. Compartiment extérieur (3) d'un contenant de sécurité (1) réalisant les caractéristiques des revendications 1 à 12,
**caractérisé par**
les caractéristiques se rapportant au compartiment extérieur (3) comprises dans l'une quelconque des revendications 1 à 12.

14. Compartiment intérieur (2) d'un contenant de sécurité (1) réalisant les caractéristiques des revendications 1 à 12,
**caractérisé par**
au moins une ouverture (2a) fermante, accessible par le dessus pour le produit de chargement et au moins une fenêtre de gonflement (23) dépassant l'élasticité et la perméabilité au gaz du la matière du compartiment intérieur qui l'entoure.
